# EUROPEAN PATENT SPECIFICATION

(11) **EP 3 376 333 B1**
(45) Date of publication and mention of the grant of the patent: **07.06.2023**
(21) Application number: 18160080.0
(22) Date of filing: 06.03.2018
(51) Int. Cl.: G05G 1/38, G05G 1/44, G05G 1/50

(54) **PEDAL APPARATUS AND MANUFACTURING METHOD THEREOF**
PEDALVORRICHTUNG UND HERSTELLUNGSVERFAHREN DAFÜR
APPAREIL À PÉDALE ET PROCÉDÉ DE FABRICATION CORRESPONDANT

(30) Priority: 06.03.2017 KR 20170028253; 12.02.2018 KR 20180017298
(43) Date of publication of application: 19.09.2018
(73) Proprietor: Tyco Electronics AMP Korea Co., Ltd., Gyeongsangbuk-do 38459 (KR); Dong Hee Industrial Co., Ltd., Ulsan 44784 (KR)
(72) Inventor: Kim, Jun Woo, 38459 Gyeongsangbuk-do (KR); Hong, Gap Pyo, 38459 Gyeongsangbuk-do (KR); Kim, Young Woon, 38459 Gyeongsangbuk-do (KR); Lee, Jung Min, 46080 Busan (KR); Park, Wi Sang, 17936 Gyeonggi-do (KR); Kim, Dong Hwan, 44476 Ulsan (KR)
(74) Representative: Johnstone, Douglas Ian

(56) References cited:
- EP-A1- 1 394 650
- EP-A2- 1 975 760
- DE-A1-102006 035 882
- DE-A1-102010 020 314
- JP-A- 2007 276 707
- JP-A- 2016 113 113
- US-A1- 2007 151 398
- US-A1- 2014 238 181

## Description

### CROSS-REFERENCE TO RELATED APPLICATION(S)

This application claims the priority benefit of Korean Patent Application No. 10-2017-0028253 filed on March 6, 2017, and Korean Patent Application No. 10-2018-0017298 filed on February 12, 2018, in the Korean Intellectual Property Office.

### BACKGROUND

### 1. Field

One or more example embodiments relate to a pedal apparatus and a manufacturing method thereof.

### 2. Description of Related Art

A pedal apparatus is installed in a vehicle, and types thereof include an accelerator pedal apparatus and a brake pedal apparatus. In general, with the development of electronics and communications technology, researches on the method of replacing an existing mechanical connection of a vehicle with a sensor, an electric motor, and a field-bus are actively conducted. Accordingly, a mechanical throttle system used in the past is replaced with an electronic throttle system (ETS). The ETS electronically controls an acceleration of a vehicle. A general ETS includes an accelerator pedal position sensor (APS) mounted on an accelerator pedal to transmit a press state and position information of the accelerator pedal to an electric control unit (ECU). The ECU calculates an amount of air to flow in an engine based on the press state and the position information of the accelerator pedal, and transmits an opening angle of a throttle valve to an electric throttle controller (ETC) based on a corresponding result to control a speed of the vehicle based on an acceleration requested by a driver.

Since the ETS controls the speed of the vehicle based on information measured by the APS, an accuracy of the APS is most significant of all.

A prior art vehicle accelerator pedal apparatus (on which the preamble of claim 1 is based) is disclosed in patent JP 2007-276707 A. The apparatus includes a hollow housing with a cover and accommodating a part of a pedal arm which is journaled for rotation by engagement with inner surfaces of the housing and the cover. The pedal arm rotates around a hollow shaft which extends through the cover, the pedal arm and the housing and in which a circuit board including a Hall sensor is positioned which senses movement of a magnet embedded in the pedal arm.

The above description is technical information that has been possessed or acquired by the inventor(s) in the process of conceiving the present invention, and cannot be necessarily considered as a well-known technology that had been known to the public before the filing of the present invention.

### SUMMARY

An aspect provides a pedal apparatus including a sensor configured to sense a position of a pedal pad using a magnetic field in a contactless manner.

According to the invention there is provided a pedal apparatus according to claim 1.

The Hall sensor may be positioned on the rotation axis.

The pedal cover may further include a connector fastener to which a connector electrically connected to the sensing board to transmit a signal sensed by the Hall sensor to an outside is fastened. The pedal apparatus may further include a plurality of terminals to be electrically connected to the connector, the plurality of terminals positioned in the connector fastener and installed in a direction perpendicular to the sensing board.

The connector fastener and the cover body may be formed as an integral body.

The sensing board may include a board main part on which the Hall sensor is installed, and a board end part including a terminal fastening hole through which the plurality of terminals are fastened thereto. A width of the board end part may be greater than a width of the board main part such that the sensing board may not be inserted into the board insertion space in excess of a predetermined length.

The pedal cover may further include a support rib formed on an inner surface of the board insertion space, the support rib configured to prevent the board end part from moving backward when the plurality of terminals are fastened to the board end part.

The pedal cover may further include a cover lid configured to shield the board insertion space from the outside. Before the cover lid is installed, the sensing board may be inserted and installed through the board insertion space in a direction parallel to the rotation axis. When the sensing board is installed, the plurality of terminals may be inserted in a direction perpendicular to the rotation axis and fastened to the sensing board through the connector fastener.

The pedal apparatus may further include a connecting link configured to connect the pedal pad and one end of the pedal arm, a pressurizing member with one end supported by a lower side of the one end of the pedal arm, and another end provided between an upper inner surface of the pedal housing and the rotation axis, and an elastic member disposed between a middle part of the pressurizing member and a lower inner surface of the pedal housing.

The pedal apparatus may further include a pressurizing member with one end supported by an upper side of one end of the pedal arm, and another end provided between a lower inner surface of the pedal housing and the rotation axis, and an elastic member disposed between a middle part of the pressurizing member and an upper inner surface of the pedal housing.

The magnet may include a pair of magnets positioned on opposite side from the Hall sensor, and facing surfaces of the pair of magnets may have opposite magnetisms or polarities.

According to another aspect, there is also provided a method of manufacturing a pedal apparatus including a pedal pad, a pedal housing, a pedal arm installed in an inner space of the pedal housing, the pedal arm configured to rotate in response to an operation of the pedal pad, and a pedal cover configured to shield the inner space of the pedal housing, the method including inserting a sensing board including a Hall sensor from an outside in a direction perpendicular to a surface of the pedal cover such that the Hall sensor may be positioned in a hollow of the pedal arm, and inserting a plurality of terminals configured to transmit a signal sensed by the Hall sensor to the outside in a direction perpendicular to the sensing board such that the plurality of terminals may be installed on the sensing board.

The plurality of terminals may be installed on the sensing board using press fit.

The pedal cover may include a connector fastener to which a connector electrically connected to the sensing board to transmit the signal sensed by the Hall sensor to the outside is fastened, and the plurality of terminals may be inserted through the connector fastener and installed on the sensing board.

Additional aspects of example embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of example embodiments, taken in conjunction with the accompanying drawings of which:
FIG. 1 is a perspective view illustrating a pedal apparatus according to an example embodiment;
FIG. 2 is an exploded perspective view illustrating a pedal apparatus according to an example embodiment;
FIG. 3 illustrates a relation between a sensing board and a magnet according to an example embodiment;
FIG. 4 is an exploded perspective view illustrating a connection between a pedal arm and a pedal housing according to an example embodiment;
FIG. 5 is an exploded perspective view illustrating a connection between a pedal arm and a pedal cover according to an example embodiment;
FIG. 6 is an exploded perspective view illustrating a connection between a pedal arm and a pressurizing member according to an example embodiment;
FIG. 7 illustrates a pressurizing member rotating with respect to a pedal arm according to an example embodiment;
FIGS. 8 and 9 are cross-sectional views illustrating an operation of a pedal apparatus according to an example embodiment;
FIG. 10 is a side view illustrating a pedal apparatus according to an example embodiment;
FIG. 11 illustrates the pedal apparatus FIG. 10 with a pedal cover removed;
FIG. 12 is a cross-sectional view illustrating a pedal apparatus according to an example embodiment; and
FIGS. 13A and 13B illustrate a distribution of magnetic force lines formed by a pair of magnets when the pedal apparatus of FIG. 12 operates.

### DETAILED DESCRIPTION

Hereinafter, embodiments of the present disclosure will be described with reference to the accompanying drawings. Regarding the reference numerals assigned to the components in the drawings, it should be noted that the same components will be designated by the same reference numerals, wherever possible, even though they are shown in different drawings. Also, in the description of the embodiments, detailed description of well-known related structures or functions will be omitted when it is deemed that such description will cause ambiguous interpretation of the present disclosure.

Also, in the description of the components, terms such as first, second, A, B, (a), (b) or the like may be used herein when describing components of the present disclosure. Each of these terms is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

The same name may be used to describe a component included in an embodiment and a component having a common function in another embodiment. Unless otherwise mentioned, the description on the embodiment may be applicable to the other embodiment and thus, duplicated description will be omitted for conciseness.

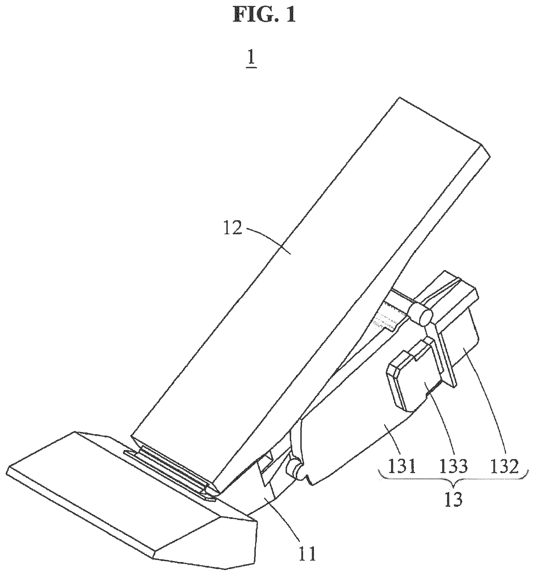

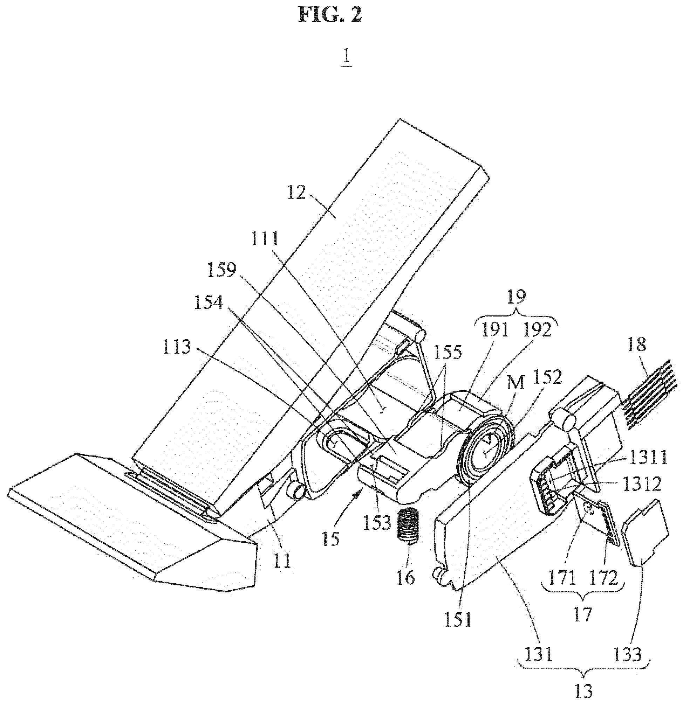

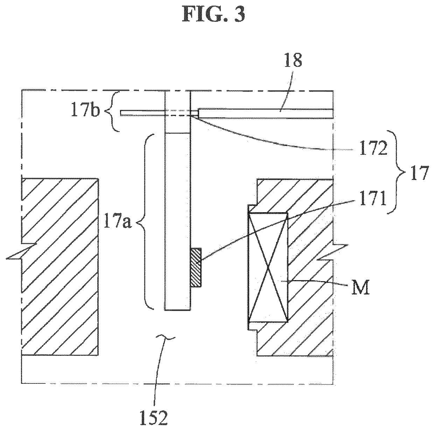

FIG. 1 is a perspective view illustrating a pedal apparatus according to an example embodiment, FIG. 2 is an exploded perspective view illustrating the pedal apparatus according to an example embodiment, and FIG. 3 illustrates a relation between a sensing board and a magnet according to an example embodiment.

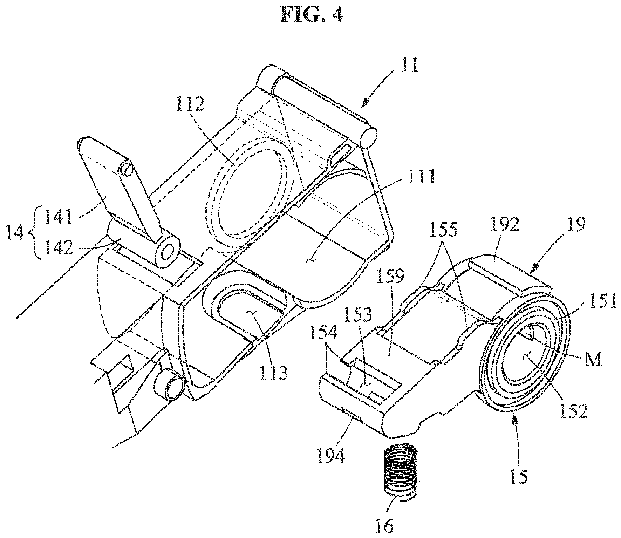

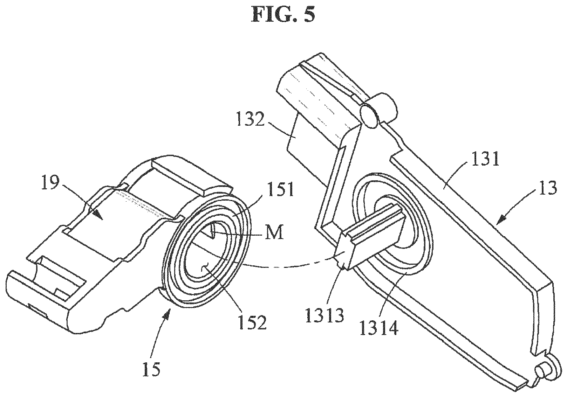

FIG. 4 is an exploded perspective view illustrating a connection between a pedal arm and a pedal housing according to an example embodiment, and FIG. 5 is an exploded perspective view illustrating a connection between the pedal arm and a pedal cover according to an example embodiment.

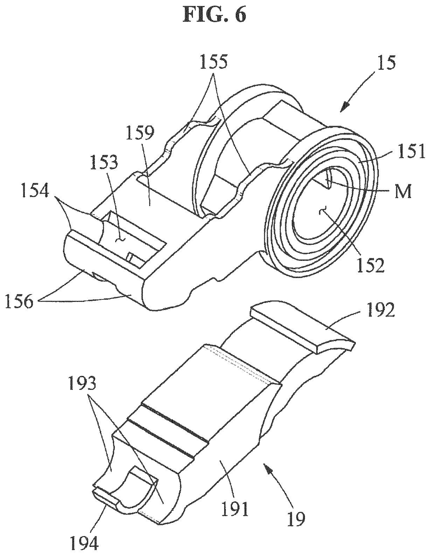

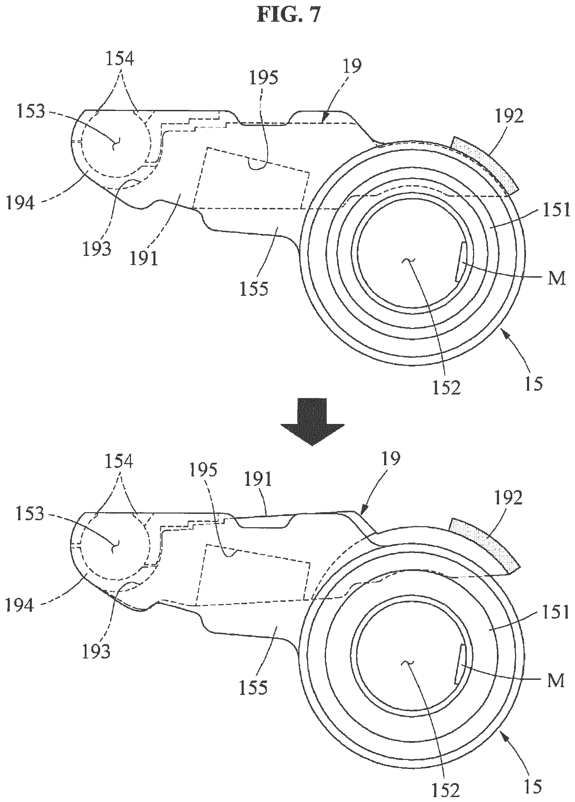

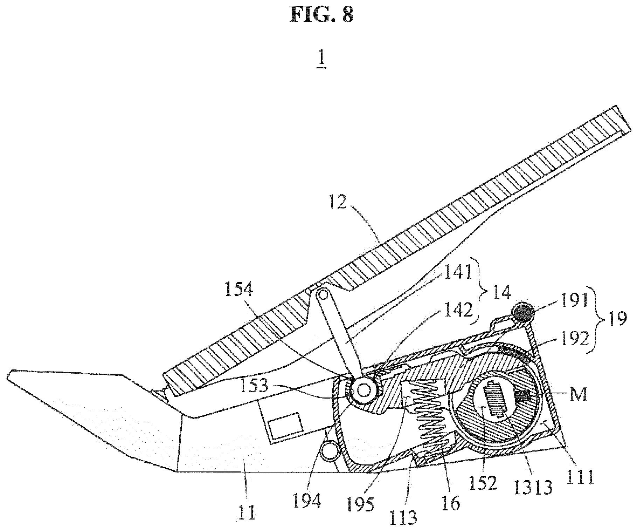

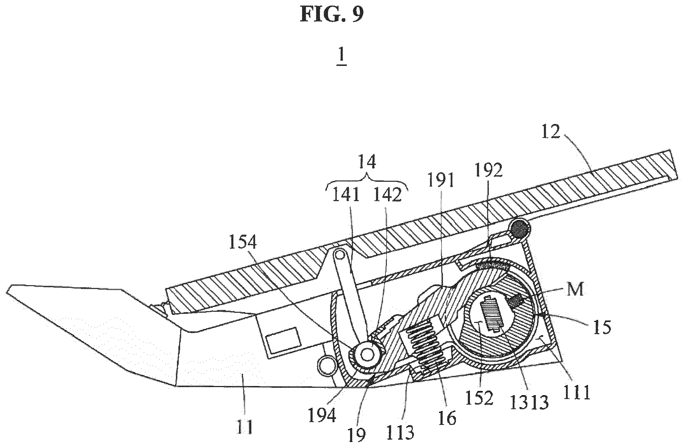

FIG. 6 is an exploded perspective view illustrating a connection between the pedal arm and a pressurizing member according to an example embodiment, FIG. 7 illustrates the pressurizing member rotating with respect to the pedal arm according to an example embodiment, and FIGS. 8 and 9 are cross-sectional views illustrating an operation of the pedal apparatus according to an example embodiment.

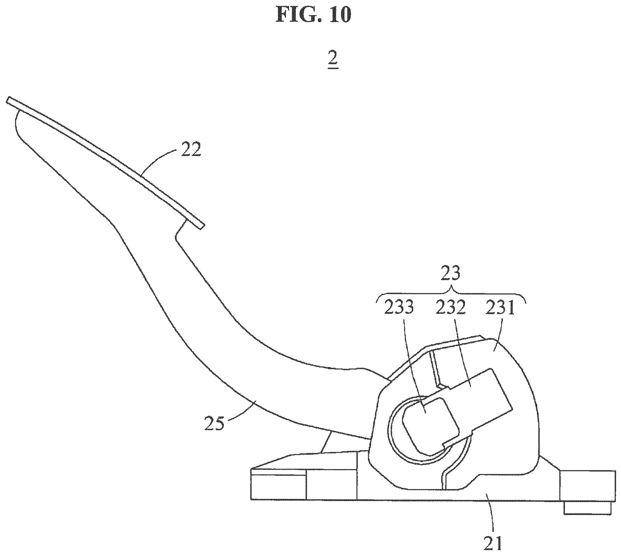

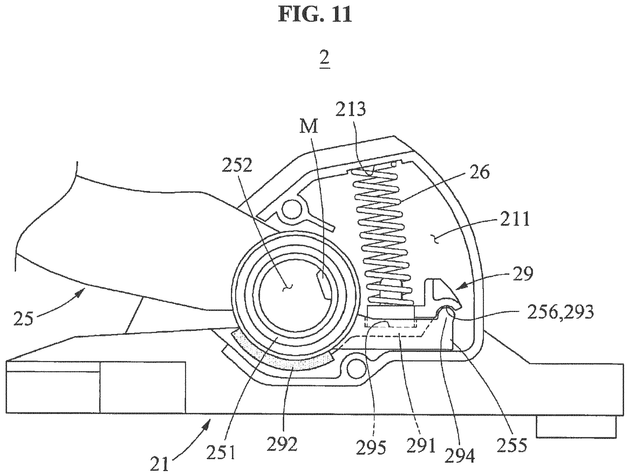

Referring to FIGS. 1 through 9, a pedal apparatus 1 may be installed in a conveyance such as a vehicle. The pedal apparatus 1 may sense how far a user presses a pedal pad 12 and transmit the corresponding information to a controller (not shown). The pedal apparatus 1 may include an accelerator pedal apparatus and a brake pedal apparatus. Hereinafter, the accelerator pedal apparatus will be described exemplarily. However, example embodiments are not necessarily limited to the accelerator pedal apparatus. Further, although FIGS. 1 through 9 illustrate a box-type pedal apparatus, the type of the pedal apparatus 1 is not necessarily limited thereto. For example, the pedal apparatus 1 may be a pendant-type pedal apparatus as shown in FIGS. 10 and 11. In addition, the spirit of example embodiments may also be applied to various other modified examples.

The pedal apparatus 1 includes a pedal housing 11, the pedal pad 12, a pedal cover 13, a connecting link 14, a pedal arm 15, a magnet M, an elastic member 16, a sensing board 17, a plurality of terminals 18, and a pressurizing member 19.

The pedal housing 11 includes an inner space 111 configured to receive various components such as the pedal arm 15 and the elastic member 16, a first rotation guide ring 112, and a first receiving recess 113. The pedal housing 11 may include a top wall, a bottom wall, and a side wall, and the inner space 111 may be opened toward an opposite side of the side wall.

The first rotation guide ring 112 rotatably supports the pedal arm 15. The first rotation guide ring 112 is provided on an inner surface of the side wall of the pedal housing 11. The first rotation guide ring 112 may be, for example, a protrusion that protrudes from the side wall of the pedal housing 11. In another example, the first rotation guide ring 112 may be a groove that is recessed from the side wall of the pedal housing 11.

The first receiving recess 113 may be provided on a lower inner surface of the pedal housing 11 to support one end of the elastic member 16.

The pedal pad 12 rotates relative to the pedal housing 11. For example, as shown in FIG. 1, one side of the pedal pad 12 may be rotatably connected to the pedal housing 11.

The pedal cover 13 is fastened to the pedal housing 11, and includes a cover body 131, a connector fastener 132, and a cover lid 133.

The cover body 131 shields the opened portion of the inner space 111 of the pedal housing 11, thereby preventing an inflow of an external foreign substance into the inner space 111. The cover body 131 includes a board insertion space 1311, a support rib 1312, a board box 1313, and a second rotation guide ring 1314.

The board insertion space 1311 is a space configured to receive the sensing board 17, and may be recessed toward a hollow 152 of the pedal arm 15. The board insertion space 1311 is exposed to an outside, and the sensing board 17 may be easily inserted through the exposed space.

The support rib 1312 may be formed on an inner surface of the board insertion space 1311. The support rib 1312 may prevent a board end part 17b from moving backward when the plurality of terminals 18 are fastened to the board end part 17b of the sensing board 17. A plurality of support ribs 1312 may be provided to be spaced apart from each other such that end portions of the terminals 18 passing through the board end part 17b may be inserted into an interval or space between the support ribs 1312, thereby preventing the end portions of the terminals 18 from being obstructed by other members.

The board box 1313 shields the board insertion space 1311 from the inner space 111 of the pedal housing 11. The board box 1313 may prevent a malfunction caused by fine particles generated by friction and coming in the sensing board 17 when the pedal arm 15 operates in the inner space 111 of the pedal housing 11.

The second rotation guide ring 1314 rotatably supports the pedal arm 15. The second rotation guide ring 1314 and the first rotation guide ring 112 may be positioned on opposite sides. The second rotation guide ring 1314 and the first rotation guide ring 112 are engaged with a pair of coupling rings 151 of the pedal arm 15. By the above structure, without employing a separate shaft structure that penetrates through the pedal arm 15, the pedal arm 15 may be rotatably installed in the inner space 111 of the pedal housing 11. That is, a shaft structure that passes through the hollow 152 of the pedal arm 15 is unnecessary. Thus, as shown in the drawings, the sensing board 17 may be positioned in the hollow 152.

The connector fastener 132 may be a portion to which an external connector (not shown), to be electrically connected to the sensing board 17, is fastened. The external connector may be fastened to the connector fastener 132, and physically and electrically connected to the plurality of terminals 18 positioned in the connector fastener 132, thereby transmitting a signal sensed by a Hall sensor 171 of the sensing board 17 to the outside.

The cover lid 133 may be fastened to the cover body 131 to shield the board insertion space 1311 from the outside, thereby preventing an inflow of a foreign substance into the sensing board 17. The cover lid 133 may be fixed to the cover body 131 using, for example, laser welding.

The connecting link 14 may connect the pedal pad 12 and one end of the pedal arm 15 such that an angle of the pedal arm 15 may change based on a change in an angle of the pedal pad 12. The connecting link 14 may include a connecting body 141 rotatably connected to a bottom surface of the pedal pad 12, and a connecting head 142 formed at an end portion of the connecting body 141 and rotatably connected to the one end of the pedal arm 15.

A thickness of a portion of the connecting body 141 connected to the connecting head 142 may be less than a thickness of the connecting head 142. The above structure may prevent a separation of the connecting link 14 from a connecting recess 153 of the pedal arm 15, without using a separate shaft structure.

The pedal arm 15 may be disposed in the inner space 111 of the pedal housing 11, and rotate based on an angle of rotation of the pedal pad 12. For example, as shown in FIG. 8, the pedal arm 15 may be connected indirectly to the pedal pad 12 through the connecting link 14. The pedal arm 15 may include the pair of coupling rings 151, the hollow 152, the connecting recess 153, a separation preventing projection 154, a pair of guide plates 155, and a first support 156.

The pair of coupling rings 151 may be disposed at both ends of the hollow 152, and may be respectively engaged with the first rotation guide ring 112 and the second rotation guide ring 1314 such that the pedal arm 15 may rotate about a predetermined virtual rotation axis.

The hollow 152 may be a cylindrical hole that penetrates through the pedal arm 15, as shown in the drawings. Meanwhile, the hollow 152 may not necessarily have a cylindrical shape. The hollow 152 may be a hole having another shape, or may be a cavity that is recessed from one surface of the pedal arm 15. The hollow 152 may provide a space in which the sensing board 17 may be positioned. When the pedal apparatus 1 is assembled, the hollow 152 may be disposed at a central portion of the pedal housing 11, that is, at a position sufficiently spaced apart from the outside. Thus, the sensing board 17 positioned in the hollow 152 may be insensitive to a disturbance such that an accuracy of measuring the angle of rotation of the pedal pad 12 may improve. In addition, the sensing board 17 is typically installed on an outer wall of the pedal apparatus 1. In this example, to prevent an effect of magnetic fields generated by external electronic components on the sensing board 17, a sufficient air gap is generally formed between the sensing board 17 and the external space. However, in the above structure suggested herein, without forming a separate air gap, the inner space 111 of the pedal housing 11 may sufficiently function as the air gap. Thus, the overall volume of the pedal apparatus 1 may be reduced.

The connecting recess 153 may be a recess into which the connecting head 142 is to be inserted, and may be formed at the one end of the pedal arm 15. The connecting recess 153 may be formed in a cylindrical shape with a size and a diameter corresponding to the connecting head 142. An upper side of the connecting recess 153 may be opened such that the connecting body 141 extending from the connecting head 142 may be exposed. The separation preventing projection 154 may be provided on at least a portion of the opened upper side of the connecting recess 153 to support an upper side of the connecting head 142 such that the connecting head 142 laterally inserted into the connecting recess 153 may not be separated upward.

The pair of guide plates 155 may be construed as both side surfaces of the pedal arm 15. The pressurizing member 19 may be disposed between the pair of guide plates 155, which will be described later. The above structure may prevent a separation of the pressurizing member 19 from the pedal arm 15, and also guide the pressurizing member 19 to stably rotate with respect to the pedal arm 15.

The first support 156 may be a curved surface formed on a bottom surface of the one end of the pedal arm 15, and may support one end of the pressurizing member 19. The first support 156 may be construed as a portion of the bottom surface of the connecting recess 153.

The elastic member 16 may be disposed between a middle part of the pressurizing member 19 and the lower inner surface of the pedal housing 11, to provide an elastic force to press the pressurizing member 19 upward. Thus, the elastic member 16 may provide the elastic force to rotate the pedal pad 12 in a direction away from the pedal housing 11.

The magnet M may be installed in the pedal arm 15. For example, the magnet M may be fixed and installed in the pedal arm 15 using insert injection in a process of manufacturing the pedal arm 15. As shown in the drawings, the magnet M may be installed on a surface of the inner wall of the hollow 152 and the magnet M may be exposed through the hollow 152. In this example, the magnet M may be positioned closer to the sensing board 17 when compared to a case in which the magnet M is installed to be mounted in the pedal arm 15, such that the magnet M may not be exposed through the hollow 152. Thus, a strength of a magnetic field generated by the magnet M and sensed by the sensing board 17 may increase. Meanwhile, unlike the drawings, a plurality of magnets M may be provided. For example, by employing magnets that generate relatively strong magnetic fields, for example, rare earth magnets, particularly, neodymium magnets, sizes and quantities of the magnets may be reduced. A plurality of magnets with relatively high supply and price stability, for example, ferrite magnets, may be used. As described above, the types and the number of the magnets M may be modified variously.

The sensing board 17 may transmit information related to the angle of rotation of the pedal pad 12 to the outside through the terminals 18. At least a portion of the sensing board 17 may be inserted into the hollow 152. The sensing board 17 may include the Hall sensor 171 configured to sense a magnetic force generated by the magnet M, and a terminal fastening hole 172 through which the plurality of terminals 18 are fastened thereto.

The Hall sensor 171 may be positioned in the hollow 152, for example, on the rotation axis of the pedal arm 15. The Hall sensor 171 may sense a change in the magnetic field generated by the magnet M. Thus, the Hall sensor 171 may sense an amount of rotation of the pedal arm 15 to which the magnet M is fixed.

The sensing board 17 may be divided into a board main part 17a on which the Hall sensor 171 is installed, and the board end part 17b including the terminal fastening hole 172.

A width of the board end part 17b may be greater than a width of the board main part 17a such that the sensing board 17 may not be inserted into the board insertion space 1311 in excess of a predetermined length.

The plurality of terminals 18 may be positioned in the connector fastener 132, and electrically connected to the external connector (not shown) fastened to the connector fastener 132, thereby transmitting an electrical signal of the sensing board 17 to the outside. The plurality of terminals 18 may be installed in a direction perpendicular to the sensing board 17, as shown in FIGS. 2 and 3. By the above structure, the plurality of terminals 18 may be inserted through the connector fastener 132, and simply installed on the sensing board 17 using press fit.

Meanwhile, unlike the example embodiments, in a case in which a terminal of a connecting fastener and a sensing board are in parallel, a conductive elastic body may be needed to guarantee a connection between the terminal of the connector fastener and the sensing board, and the connector fastener may need to be manufactured as a separate component. However, according to the example embodiments, the connector fastener 132 may be disposed in a direction perpendicular to the sensing board 17, and the terminals 18 may be definitely coupled to the sensing board 17 using press fit. Thus, the connector fastener 132 and the cover body 131 may be formed as an integral body using injection molding. That is, through the structure described in the example embodiments, the number of components may be reduced, and thus time and costs for manufacturing may be reduced.

Further, a coupling force of the sensing board 17 and the terminals 18 may structurally improve without using a separate medium. In addition, oscillation horizontally applied to the sensing board 17 may be attenuated by the terminals 18, and oscillation horizontally applied to the terminals 18 may be attenuated by the sensing board 17. Thus, a structure robust against oscillation may be provided.

The pressurizing member 19 may press the inner wall of the pedal housing 11 when the user controls the pedal pad 12. The one end of the pressurizing member 19 may be supported by a lower side of the one end of the pedal arm 15, and another end of the pressurizing member 19 may be positioned between an upper inner surface of the pedal housing 11 and the hollow 152 of the pedal arm 15.

The pressurizing member 19 may include a pressurizing lever 191 configured to rotate with respect to the pedal arm 15, a second support 193 positioned at one end of the pressurizing lever 191, a friction pad 192 positioned at another end of the pressurizing lever 191, a stopping projection 194 to be stopped by an end portion of the pedal arm 15 such that the pressurizing lever 191 may not be separated from the pedal arm 15, and a second receiving recess 195 formed on a bottom surface of the pressurizing lever 191 to support another end of the elastic member 16.

The friction pad 192 may be a member that produces friction when rubbed against the inner wall of the pedal housing 11, and may include, for example, a material having a more excellent frictional force than the pressurizing lever 191.

The second support 193 may be a curved surface formed on a top surface of the one end of the pressurizing member 19, and may support a lower end of an outer circumferential surface of the first support 156 of the pedal arm 15. The second support 193 may be formed to have the same or similar curvature as the first support 156, and may support the pedal arm 15 such that the pressurizing member 19 may rotate with respect to the pedal arm 15 as shown in FIG. 7. A pair of second supports 193 may be disposed on both sides from the stopping projection 194.

As shown in FIGS. 8 and 9, when the user presses the pedal pad 12, the one end of the pedal arm 15 may rotate downward and the elastic member 16 may be compressed such that an elastic force may increase and a reaction force applied to the pressurizing member 19 may also increase. Here, since the pedal arm 15 and the pressurizing member 19 are separated from each other, the reaction force by the elastic member 16 may be concentrated on the pressurizing member 19 such that the friction pad 192 at the other end of the pressurizing member 19 may be rubbed against the inner surface of the pedal housing 11 with a further increased frictional force.

Thus, since the pressurizing member 19 is separated from the pedal arm 15, a load generated as the pedal pad 12 is pressed may be concentrated on the friction pad 192, rather than the pair of rotation guide rings 112 and 1314 supporting the pedal arm 15. In this example, the frictional force of the friction pad 192 may increase while abrasion of the rotation guide rings 112 and 1314 and the coupling rings 151 may be minimized, and a movement of the pedal arm 15 from the rotation guide rings 112 and 1314 may be prevented, whereby a value measured by the sensing board 17 may be stably output.

When the user releases the pedal pad 12, the one end of the pedal arm 15 may rotate and return to the original upper position by the elastic force of the elastic member 16, and the compressed elastic member 16 may be restored such that the elastic force may gradually decrease and the reaction force applied to the pressurizing member 19 may also decrease. In this example, the elastic force used to restore the elastic member 16 may also be used to assist the pedal arm 15 to move upward and the frictional force with which the friction pad 192 is rubbed against the inner surface of the pedal housing 11 may decrease. Thus, a hysteresis between a pressing force and a releasing force with respect to the pedal pad 12 may occur.

As described above, the pressurizing member 19 configured to rotate relative to the pedal arm 15 may be rubbed against the inner surface of the pedal housing 11, thereby increasing the frictional force and also causing the hysteresis. Thus, the number of components may be reduced and production costs may also be reduced.

Hereinafter, a method of manufacturing the pedal apparatus 1 will be described.

The method of manufacturing the pedal apparatus 1 may include an operation of manufacturing a pedal cover by forming the cover body 131 and the connector fastener 132 as an integral body using injection molding, an operation of inserting a sensing board including a Hall sensor from an outside in a direction perpendicular to a surface of the pedal cover such that the Hall sensor may be positioned in a hollow of a pedal arm, and an operation of inserting a plurality of terminals configured to transmit a signal sensed by the Hall sensor to the outside in a direction perpendicular to the sensing board such that the plurality of terminals may be installed on the sensing board.

Before the cover lid 133 is installed, the sensing board 17 may be inserted and installed in the board insertion space 1311 in a direction parallel to the rotation axis of the pedal arm 15. Further, when the sensing board 17 is installed, the plurality of terminals 18 may be inserted in a direction perpendicular to the rotation axis of the pedal arm 15 and fastened to the sensing board 17 through the connector fastener 132.

In an example, a Hall sensor configured to sense a magnetic field may be positioned in a hollow of a pedal arm, whereby a sufficient separation distance from an outside to the Hall sensor may be secured. Thus, the Hall sensor may be insensitive to a disturbance and thereby measure a position of a pedal with an improved accuracy. Further, a separate air gap to prevent an effect of the disturbance is unnecessary, and thus the overall volume of a pedal apparatus may be reduced. Further, a sensing board and terminals may be installed in perpendicular directions, and thus a process and costs for connecting the terminals to the sensing board may be reduced, a coupling force of the sensing board and the terminals may structurally improve without using a separate medium, and a structure robust against vertical and horizontal oscillation may be provided. Further, a connector fastener and a pedal cover may be formed as an integral body, and thus the total number of components may be reduced and manufacturing costs and efforts may also be reduced.

FIG. 10 is a side view illustrating a pedal apparatus according to an example embodiment, and FIG. 11 illustrates the pedal apparatus FIG. 10 with a pedal cover removed.

Referring to FIGS. 10 and 11, a pedal apparatus 2 may include a pedal housing 21, a pedal pad 22, a pedal cover 23, a pedal arm 25, a magnet M, an elastic member 26, a sensing board (not shown), a plurality of terminals (not shown), and a pressurizing member 29.

The pedal housing 21 may include a hole through which the pedal arm 25 passes such that the pedal arm 25 may extend to be connected to the pedal pad 22. The pedal housing 21 may include an inner space 211, a first rotation guide ring (not shown), and a first receiving recess 213.

The first receiving recess 213 may be provided on an upper inner surface of the pedal housing 21 to support an upper end of the elastic member 26.

The pedal pad 22 may be connected directly to the pedal arm 25, for example, without using a separate connecting link, and transmit a pedal force of a user to the pedal arm 25.

The pedal cover 23 may include a cover body 231, a connector fastener 232, and a cover lid 233. Similar to the example embodiment described above, the cover body 231 may include a board insertion space (not shown), a support rib (not shown), a board box (not shown), and a second rotation guide ring (not shown).

The pedal arm 25 may include a pair of coupling rings 251, a hollow 252, a pair of guide plates 255, and a first support 256. The first support 256 may be a curved surface formed on a top surface of one end of the pedal arm 25, and support one end of the pressurizing member 29.

The elastic member 26 may be disposed between a middle part of the pressurizing member 29 and the upper inner surface of the pedal housing 21, to provide an elastic force to press the pressurizing member 29 downward. Thus, the elastic member 26 may provide the elastic force to move the pedal pad 22 upward.

The sensing board (not shown) may include a Hall sensor and a terminal fastening hole, and may be divided into a board main part on which the Hall sensor is installed and a board end part including the terminal fastening hole.

The pressurizing member 29 may include a pressurizing lever 291, a second support 293, a friction pad 292, and a second receiving recess 295.

The second support 293 may be a curved surface formed on a bottom surface of the one end of the pressurizing member 29, and may support an upper end of an outer circumferential surface of the first support 256 of the pedal arm 25.

The second receiving recess 295 may be formed on a top surface of the pressurizing lever 291 to support a lower end of the elastic member 26.

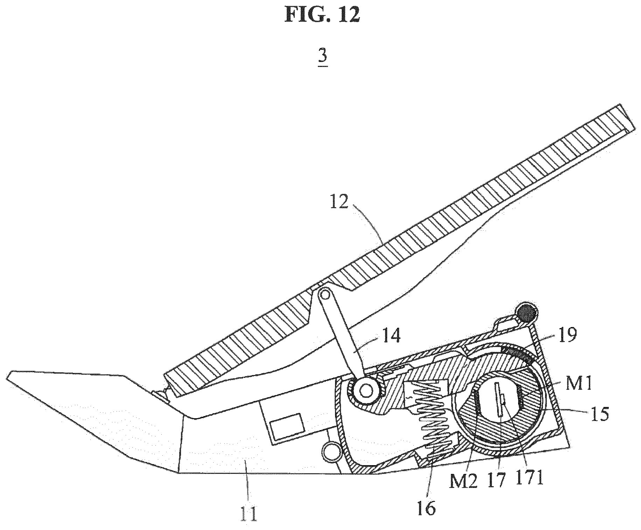

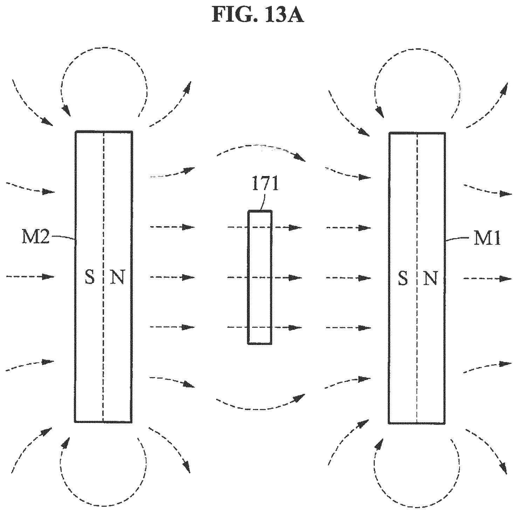

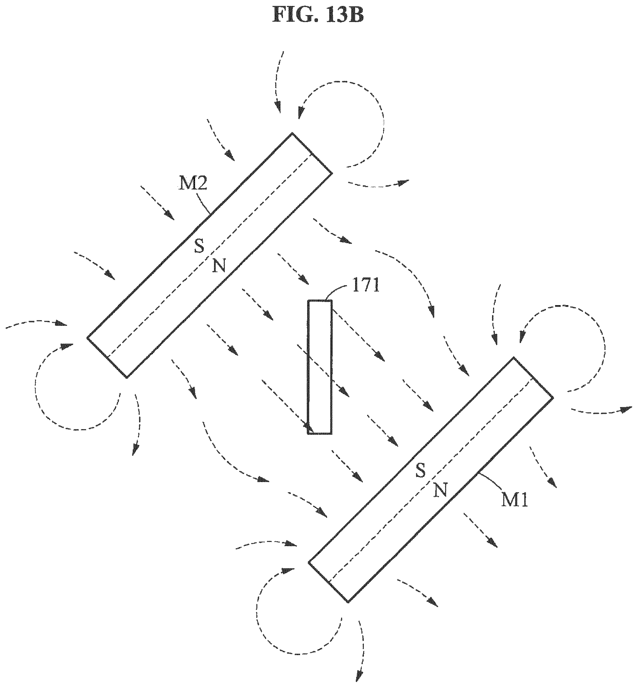

FIG. 12 is a cross-sectional view illustrating a pedal apparatus according to an example embodiment, and FIGS. 13A and 13B illustrate a distribution of magnetic force lines formed by a pair of magnets when the pedal apparatus of FIG. 12 operates. For ease of description, a board box is omitted from FIG. 12.

Referring to FIGS. 12 through 13B, a pedal apparatus 3 may include a pair of magnets M1 and M2 positioned on opposite sides from the Hall sensor 171 of the sensing board 17. The pair of magnets M1 and M2 may be disposed such that facing surfaces thereof may have opposite magnetisms or polarities.

By the above structure, almost linear magnetic force lines may be formed in a space between the pair of magnets M1 and M2, as shown in FIGS. 13A and 13B. Thus, the Hall sensor 171 may sense a change in directions of the magnetic force lines, thereby sensing a change in an angle of the pedal arm 15.

For example, due to an error occurring in a process of manufacturing and assembling the pedal apparatus 3, the Hall sensor 171 may be disposed at a position other than a set position. If a single magnet is provided, an effect of a magnetic field formed by the single magnet on the Hall sensor 171 in response to a change in the angle of the pedal arm 15 may differ from what is expected. That is, in a case in which the position of the Hall sensor 171 changes in upward/downward/leftward/rightward directions due to an assembly tolerance when the pedal arm 15 operates, the effect on the Hall sensor 171 in response to the change in the angle of the pedal arm 15 may be different from what is expected. Thus, such a difference may decrease an accuracy of measuring the angle of the pedal pad 12.

However, in the example of FIG. 12, although the position of the Hall sensor 171 is apart from the set position in upward/downward/leftward/rightward directions, the directions of the magnetic force lines formed in the space between the pair of magnets M1 and M2 may scarcely change. Thus, in the example of FIG. 12, despite the error occurring in the process of manufacturing and assembling the pedal apparatus 3, the relatively accurate angle of the pedal pad 12 may be measured.

According to example embodiments, a Hall sensor configured to sense a magnet field may be positioned in a hollow of a pedal arm, whereby a sufficiency separation distance from an outside to the Hall sensor may be secured. Thus, the Hall sensor may be insensitive to a disturbance and thereby measure a position of a pedal with an improved accuracy.

Further, a separate air gap to prevent an effect of the disturbance is unnecessary, and thus the overall volume of a pedal apparatus may be reduced.

Further, a sensing board and terminals may be installed in perpendicular directions, and thus a process and costs for connecting the terminals to the sensing board may be reduced, a coupling force of the sensing board and the terminals may structurally improve without using a separate medium, and a structure robust against vertical and horizontal oscillation may be provided.

Further, a connector fastener and a pedal cover may be formed as an integral body, and thus the total number of components may be reduced and manufacturing costs and efforts may also be reduced.

A number of example embodiments have been described above. Nevertheless, it should be understood that various modifications may be made to these example embodiments. For example, suitable results may be achieved if the described techniques are performed in a different order and/or if components in a described system, architecture, device, or circuit are combined in a different manner and/or replaced or supplemented by other components.

## Claims

1. A pedal apparatus (1), comprising:
a pedal housing (11) including an inner space (111);
a pedal pad (12) configured to rotate relative to the pedal housing (11);
a pedal arm (15) connected directly or indirectly to the pedal pad (12) to rotate based on an angle of rotation of the pedal pad (12), the pedal arm (15) including a hollow (152);
a magnet (M) installed in the pedal arm (15);
a sensing board (17) including a Hall sensor (171) configured to sense a magnetic force generated by the magnet, the sensing board (17) having at least a portion inserted into the hollow (152), and
a pedal cover (13) including a cover body (131) configured to shield the inner space (111) of the pedal housing (11),
wherein the pedal arm (15) further includes a pair of coupling rings (151) respectively disposed at both ends of the hollow (152), and the pair of coupling rings (151) are respectively engaged with a first rotation guide ring (112) formed on an inner surface of the pedal housing (11) and a second rotation guide ring (1314) formed on an inner surface of the cover body (131) such that the pedal arm (15) rotates about a predetermined rotation axis,
**characterised in that** the cover body (131) comprises:
a board insertion space (1311) recessed toward the hollow (152); and
a board box configured to shield the board insertion space (1311) from the inner space (111) of the pedal housing (11).

2. The pedal apparatus (11) of claim 1, wherein the Hall sensor (171) is positioned on the rotation axis.

3. The pedal apparatus (1) of claim 1 or 2, wherein the pedal cover (13) further includes:
a connector fastener (132) to which a connector electrically connected to the sensing board (17) to transmit a signal sensed by the Hall sensor (171) to an outside is fastened,
wherein the pedal apparatus (1) further comprises:
a plurality of terminals (18) to be electrically connected to the connector, the plurality of terminals (18) positioned in the connector fastener and installed in a direction perpendicular to the sensing board (17).

4. The pedal apparatus (1) of claim 3, wherein the connector fastener (132) and the cover body (131) are formed as an integral body.

5. The pedal apparatus (1) of claim 3 or 4, wherein the sensing board (17) comprises:
a board main part (17a) on which the Hall sensor (171) is installed; and
a board end part (17b) including a terminal fastening hole (172) through which the plurality of terminals (18) are fastened thereto,
wherein a width of the board end part (17b) is greater than a width of the board main part (17a) such that the sensing board (17) is not to be inserted into the board insertion space (1311) in excess of a predetermined length.

6. The pedal apparatus (1) of claim 5, wherein the pedal cover (13) further includes:
a support rib (1312) formed on an inner surface of the board insertion space (1311),
the support rib (1312) configured to prevent the board end part from moving backward when the plurality of terminals (18) are fastened to the board end part.

7. The pedal apparatus (1) of claim 4, wherein the pedal cover (13) further includes:
a cover lid (233) configured to shield the board insertion space (1311) from the outside.

8. The pedal apparatus (1) of any preceding claim, further comprising:
a connecting link (14) configured to connect the pedal pad (12) and one end of the pedal arm (15);
a pressurizing member (29) with one end supported by a lower side of the one end of the pedal arm (15), and another end provided between an upper inner surface of the pedal housing (11) and the rotation axis; and
an elastic member (26) disposed between a middle part of the pressurizing member (29) and a lower inner surface of the pedal housing (11).

9. The pedal apparatus (1) of any preceding claim, further comprising:
a pressurizing member (29) with one end supported by an upper side of one end of the pedal arm (15), and another end provided between a lower inner surface of the pedal housing (11) and the rotation axis; and
an elastic member (26) disposed between a middle part of the pressurizing member (29) and an upper inner surface of the pedal housing (11).

10. The pedal apparatus (1) of any preceding claim, wherein the magnet (M) includes a pair of magnets (Ml, M2) positioned on opposite side from the Hall sensor (171), and
facing surfaces of the pair of magnets M1, M2) have opposite magnetisms.

11. A method of manufacturing a pedal apparatus (1) including a pedal pad (12), a pedal housing (11), a pedal arm (15) installed in an inner space (111) of the pedal housing (11), the pedal arm (15) configured to rotate in response to an operation of the pedal pad (12), and a pedal cover (13) configured to shield the inner space (111) of the pedal housing (11), the method comprising:
inserting a sensing board (17) including a Hall sensor (171) from an outside in a direction perpendicular to a surface of the pedal cover (13) such that the Hall sensor (171) is positioned in a hollow (152) of the pedal arm (15); and
inserting a plurality of terminals (18) configured to transmit a signal sensed by the Hall sensor (171) to the outside in a direction perpendicular to the sensing board (17) such that the plurality of terminals (18) are installed on the sensing board (17).

12. The method of claim 11, wherein the plurality of terminals (18) are installed on the sensing board (17) using press fit.

13. The method of claim 11 or 12, wherein the pedal cover (13) includes:
a connector fastener (132), to which a connector electrically connected to the sensing board (17) to transmit the signal sensed by the Hall sensor (171) to the outside, is fastened,
wherein the plurality of terminals (18) are inserted through the connector fastener (132) and installed on the sensing board (17).

## Patentansprüche

1. Pedalvorrichtung (1), die Folgendes umfasst:
ein Pedalgehäuse (11) mit einem inneren Raum (111);
eine Pedalplatte (12), die zum Drehen relativ zu dem Pedalgehäuse (11) konfiguriert ist;
einen Pedalarm (15), der zum Drehen auf der Basis eines Drehwinkels der Pedalplatte (12) direkt oder indirekt mit der Pedalplatte (12) verbunden ist, wobei der Pedalarm (15) einen Hohlraum (152) aufweist;
einen in dem Pedalarm (15) installierten Magneten (M);
eine Sensorplatine (17) mit einem Hall-Sensor (171), der zum Erfassen einer von dem Magneten erzeugten Magnetkraft konfiguriert ist, wobei mindestens ein Abschnitt der Sensorplatine (17) in den Hohlraum (152) eingeführt ist, und
eine Pedalabdeckung (13) mit einem Abdeckungskörper (131), der zum Abschirmen des inneren Raums (111) des Pedalgehäuses (11) konfiguriert ist,
wobei der Pedalarm (15) ferner ein Paar Kupplungsringe (151) aufweist, die jeweils an beiden Enden des Hohlraums (152) angeordnet sind, und das Paar Kupplungsringe (151) jeweils mit einem an einer Innenfläche des Pedalgehäuses (11) ausgebildeten ersten Drehführungsring (112) und einem an einer Innenfläche des Abdeckungskörpers (131) ausgebildeten zweiten Drehführungsring (1314) in Eingriff ist, so dass sich der Pedalarm (15) um eine vorbestimmte Drehachse dreht,
**dadurch gekennzeichnet, dass** der Abdeckungskörper (131) Folgendes umfasst:
einen Platineneinführraum (1311), der in Richtung des Hohlraums (152) ausgespart ist; und
eine Platinenbox, die zum Abschirmen des Platineneinführraums (1311) vom inneren Raum (111) des Pedalgehäuses (11) konfiguriert ist.

2. Pedalvorrichtung (11) nach Anspruch 1, wobei der Hall-Sensor (171) auf der Drehachse positioniert ist.

3. Pedalvorrichtung (l) nach Anspruch 1 oder 2, wobei die Pedalabdeckung (13) ferner Folgendes beinhaltet:
ein Verbinderbefestigungselement (132), an dem ein mit der Sensorplatine (17) elektrisch verbundener Verbinder zum Übertragen eines vom Hall-Sensor (171) erfassten Signals nach außen befestigt ist,
wobei die Pedalvorrichtung (1) ferner Folgendes umfasst:
mehrere mit dem Verbinder elektrisch zu verbindende Anschlussklemmen (18), wobei die mehreren Anschlussklemmen (18) in dem Verbinderbefestigungselement positioniert und in einer Richtung lotrecht zur Sensorplatine (17) installiert sind.

4. Pedalvorrichtung (1) nach Anspruch 3, wobei das Verbinderbefestigungselement (132) und der Abdeckungskörper (131) als einstückiger Körper ausgebildet sind.

5. Pedalvorrichtung (1) nach Anspruch 3 oder 4, wobei die Sensorplatine (17) Folgendes umfasst:
ein Platinenhauptteil (17a), an dem der Hall-Sensor (171) installiert ist; und
ein Platinenendteil (17b) mit einem Anschlussklemmenbefestigungsloch (172), durch das die mehreren Anschlussklemmen (18) daran befestigt werden,
wobei eine Breite des Platinenendteils (17b) größer ist als eine Breite des Platinenhauptteils (17a), so dass die Sensorplatine (17) nicht über eine vorbestimmte Länge hinaus in den Platineneinführraum (1311) eingeführt wird.

6. Pedalvorrichtung (1) nach Anspruch 5, wobei die Pedalabdeckung (13) ferner Folgendes beinhaltet:
eine Stützrippe (1312), die an einer Innenfläche des Platineneinführraums (1311) ausgebildet ist,
wobei die Stützrippe (1312) zum Verhindern einer Bewegung des Platinenendteils nach hinten konfiguriert ist, wenn die mehreren Anschlussklemmen (18) am Platinenendteil befestigt sind.

7. Pedalvorrichtung (1) nach Anspruch 4, wobei die Pedalabdeckung (13) ferner Folgendes aufweist:
einen Abdeckungsdeckel (233), der zum Abschirmen des Platineneinführraums (1311) vor der Außenseite konfiguriert ist.

8. Pedalvorrichtung (1) nach einem vorherigen Anspruch, die ferner Folgendes umfasst:
ein Verbindungsglied (14), das zum Verbinden der Pedalplatte (12) und eines Endes des Pedalarms (15) konfiguriert ist;
ein Druckbeaufschlagungselement (29), von dem ein Ende von einer Unterseite des einen Endes des Pedalarms (15) getragen wird und das andere Ende zwischen einer oberen Innenfläche des Pedalgehäuses (11) und der Drehachse vorgesehen ist; und
ein elastisches Element (26), das zwischen einem mittleren Teil des Druckbeaufschlagungselements (29) und einer unteren Innenfläche des Pedalgehäuses (11) angeordnet ist.

9. Pedalvorrichtung (1) nach einem vorherigen Anspruch, die ferner Folgendes umfasst:
ein Druckbeaufschlagungselement (29), von dem ein Ende von einer Oberseite eines Endes des Pedalarms (15) getragen wird und ein anderes Ende zwischen einer unteren Innenfläche des Pedalgehäuses (11) und der Drehachse vorgesehen ist; und
ein elastisches Element (26), das zwischen einem mittleren Teil des Druckbeaufschlagungselements (29) und einer oberen Innenfläche des Pedalgehäuses (11) angeordnet ist.

10. Pedalvorrichtung (1) nach einem vorherigen Anspruch, wobei der Magnet (M) ein Paar auf gegenüberliegenden Seiten des Hall-Sensors (171) angeordneter Magnete (Ml, M2) umfasst, und
einander zugewandte Flächen des Magnetpaares (Ml, M2) entgegengesetzte Magnetismen aufweisen.

11. Verfahren zur Herstellung einer Pedalvorrichtung (1) mit einer Pedalplatte (12), einem Pedalgehäuse (11), einem in einem Innenraum (111) des Pedalgehäuses (11) installierten Pedalarm (15), wobei der Pedalarm (15) zum Drehen als Reaktion auf eine Betätigung der Pedalplatte (12) konfiguriert ist, und einer Pedalabdeckung (13), die zum Abschirmen des inneren Raums (111) des Pedalgehäuses (11) konfiguriert ist, wobei das Verfahren Folgendes beinhaltet:
Einführen einer Sensorplatine (17) mit einem Hall-Sensor (171) von außen in einer Richtung lotrecht zu einer Fläche der Pedalabdeckung (13), so dass der Hall-Sensor (171) in einem Hohlraum (152) des Pedalarms (15) positioniert ist; und
Einführen mehrerer Anschlussklemmen (18), die zum Übertragen eines vom Hall-Sensor (171) erfassten Signals zur Außenseite in einer Richtung lotrecht zur Sensorplatine (17) konfiguriert sind, so dass die mehreren Anschlussklemmen (18) auf der Sensorplatine (17) installiert sind.

12. Verfahren nach Anspruch 11, wobei die mehreren Anschlussklemmen (18) auf der Sensorplatine (17) mittels Presspassung installiert werden.

13. Verfahren nach Anspruch 11 oder 12, wobei die Pedalabdeckung (13) Folgendes aufweist:
ein Verbinderbefestigungselement (132), an dem ein Verbinder befestigt ist, der zum Übertragen des vom Hall-Sensor (171) erfassten Signals zur Außenseite elektrisch mit der Sensorplatine (17) verbunden ist,
wobei die mehreren Anschlussklemmen (18) durch das Verbinderbefestigungselement (132) eingeführt und an der Sensorplatine (17) installiert werden.

## Revendications

1. Appareil à pédale (1), comprenant :
un logement de pédale (11) incluant un espace interne (111) ;
un patin de pédale (12) configuré pour tourner relativement au logement de pédale (11) ;
un bras de pédale (15) raccordé directement ou indirectement au patin de pédale (12) pour tourner sur la base d'un angle de rotation du patin de pédale (12), le bras de pédale (15) incluant un creux (152) ;
un aimant (M) installé dans le bras de pédale (15) ;
une carte de détection (17) incluant un capteur à effet Hall (171) configuré pour détecter une force magnétique générée par l'aimant, la carte de détection (17) ayant au moins une portion qui est insérée dans le creux (152), et
un capot de pédale (13) incluant un corps de capot (131) configuré pour protéger l'espace interne (111) du logement de pédale (11),
dans lequel le bras de pédale (15) inclut en outre une paire de bagues de couplage (151) disposées respectivement au niveau des deux extrémités du creux (152), et la paire de bagues de couplage (151) sont mises en prise respectivement avec une première bague de guidage de rotation (112) formée sur une surface interne du logement de pédale (11) et une deuxième bague de guidage de rotation (1314) formée sur une surface interne du corps de capot (131) de telle sorte que le bras de pédale (15) tourne autour d'un axe de rotation prédéterminé,
**caractérisé en ce que** le corps de capot (131) comprend :
un espace d'insertion de carte (1311) en retrait vers le creux (152) ; et
une boîte à carte configurée pour protéger l'espace d'insertion de carte (1311) par rapport à l'espace interne (111) du logement de pédale (11).

2. Appareil à pédale (11) de la revendication 1, dans lequel le capteur à effet Hall (171) est positionné sur l'axe de rotation.

3. Appareil à pédale (1) de la revendication 1 ou 2, dans lequel le capot de pédale (13) inclut en outre :
un dispositif de fixation de connecteur (132) sur lequel est fixé un connecteur connecté électriquement à la carte de détection (17) pour transmettre un signal détecté par le capteur à effet Hall (171) vers l'extérieur,
l'appareil à pédale (1) comprenant en outre :
une pluralité de bornes (18) destinées à être connectées électriquement au connecteur, la pluralité de bornes (18) étant positionnées dans le dispositif de fixation de connecteur et installées dans un sens perpendiculaire à la carte de détection (17).

4. Appareil à pédale (1) de la revendication 3, dans lequel le dispositif de fixation de connecteur (132) et le corps de capot (131) sont formés en tant que corps solidaire.

5. Appareil à pédale (1) de la revendication 3 ou 4, dans lequel la carte de détection (17) comprend :
une partie principale de carte (17a) sur laquelle le capteur à effet Hall (171) est installé ; et
une partie extrémité de carte (17b) incluant un trou de fixation de borne (172) à travers lequel la pluralité de bornes (18) sont fixées sur celle-ci,
dans lequel une largeur de la partie extrémité de carte (17b) est plus grande qu'une largeur de la partie principale de carte (17a) de telle sorte que la carte de détection (17) ne puisse pas être insérée dans l'espace d'insertion de carte (1311) au-delà d'une longueur prédéterminée.

6. Appareil à pédale (1) de la revendication 5, dans lequel le capot de pédale (13) inclut en outre :
une nervure de support (1312) formée sur une surface interne de l'espace d'insertion de carte (1311),
la nervure de support (1312) étant configurée pour empêcher la partie extrémité de carte de se déplacer vers l'arrière lorsque la pluralité de bornes (18) sont fixées sur la partie extrémité de carte.

7. Appareil à pédale (1) de la revendication 4, dans lequel le capot de pédale (13) inclut en outre :
un couvercle de capot (233) configuré pour protéger l'espace d'insertion de carte (1311) par rapport à l'extérieur.

8. Appareil à pédale (1) de n'importe quelle revendication précédente, comprenant en outre :
une liaison de raccordement (14) configurée pour raccorder le patin de pédale (12) et une extrémité du bras de pédale (15) ;
un élément de pressurisation (29) avec une extrémité qui est soutenue par un côté inférieur de cette une extrémité du bras de pédale (15), et une autre extrémité prévue entre une surface interne supérieure du logement de pédale (11) et l'axe de rotation ; et
un élément élastique (26) disposé entre une partie centrale de l'élément de pressurisation (29) et une surface interne inférieure du logement de pédale (11).

9. Appareil à pédale (1) de n'importe quelle revendication précédente, comprenant en outre :
un élément de pressurisation (29) avec une extrémité qui est soutenue par un côté supérieur d'une extrémité du bras de pédale (15), et une autre extrémité prévue entre une surface interne inférieure du logement de pédale (11) et l'axe de rotation ; et
un élément élastique (26) disposé entre une partie centrale de l'élément de pressurisation (29) et une surface interne supérieure du logement de pédale (11).

10. Appareil à pédale (1) de n'importe quelle revendication précédente, dans lequel l'aimant (M) inclut une paire d'aimants (M1, M2) positionnés sur un côté opposé par rapport au capteur à effet Hall, et
des surfaces se faisant face de la paire d'aimants (M1, M2) ont des magnétismes opposés.

11. Procédé de fabrication d'un appareil à pédale (1) incluant un patin de pédale (12), un logement de pédale (11), un bras de pédale (15) installé dans un espace interne (111) du logement de pédale (11), le bras de pédale (15) étant configuré pour tourner en réaction à un actionnement du patin de pédale (12), et un capot de pédale (13) configuré pour protéger l'espace interne (111) du logement de pédale (11), le procédé comprenant :
l'insertion d'une carte de détection (17) incluant un capteur à effet Hall (171) à partir de l'extérieur dans un sens perpendiculaire à une surface du capot de pédale (13) de telle sorte que le capteur à effet Hall (171) soit positionné dans un creux (152) du bras de pédale (15) ; et
l'insertion d'une pluralité de bornes (18) configurées pour transmettre un signal détecté par le capteur à effet Hall (171) vers l'extérieur dans un sens perpendiculaire à la carte de détection (17) de telle sorte que la pluralité de bornes (18) soient installées sur la carte de détection (17).

12. Procédé de la revendication 11, dans lequel la pluralité de bornes (18) sont installées sur la carte de détection (17) grâce à l'utilisation d'un ajustement serré.

13. Procédé de la revendication 11 ou 12, dans lequel le capot de pédale (13) inclut :
un dispositif de fixation de connecteur (132) sur lequel est fixé un connecteur connecté électriquement à la carte de détection (17) pour transmettre le signal détecté par le capteur à effet Hall (171) vers l'extérieur,
dans lequel la pluralité de bornes (18) sont insérées à travers le dispositif de fixation de connecteur (132) et installées sur la carte de détection (17).
